# FASCICULE DE BREVET EUROPEEN

(11) **EP 1 364 147 B1**
(45) Date de publication et mention de la délivrance du brevet: **19.05.2004**
(21) Numéro de dépôt: 02706871.7
(22) Date de dépôt: 18.02.2002
(51) Int. Cl.: F16L 11/08

(54) **CONDUITE FLEXIBLE A FILM ANTI-RETASSURE**
BIEGSAME LEITUNG MIT EINER DAS " SICH-SENKEN" DER DICHTUNGSSCHICHT VERHINDERDEN ZWISCHENSCHICHT
FLEXIBLE DUCT WITH SHRINKAGE-PROOF FILM

(30) Priorité: 22.02.2001 FR 0102403
(43) Date de publication de la demande: 26.11.2003
(73) Titulaire: Technip France, 92400 Courbevoie (FR)
(72) Inventeur: ESPINASSE, Philippe, François, F-76420 Bihorel (FR)
(74) Mandataire: Bertrand, Didier
(86) Numéro de dépôt international: PCT/FR2002/000613
(87) Numéro de publication internationale: WO 2002/066878

(56) Documents cités:
- FR-A- 2 784 445
- US-A- 4 706 713
- US-A- 4 867 205

## Description

La présente invention concerne une conduite flexible susceptible d'être utilisée pour le transport de fluides tels que des hydrocarbures par exemple.

Plusieurs types de conduite flexibles sont utilisés. Certaines conduites flexibles comprennent de l'intérieur vers l'extérieur, une gaine interne d'étanchéité en matière plastique, élastomère ou autre matériau approprié relativement souple ; un tube métallique flexible non étanche qui doit résister aux efforts développés par la pression du fluide circulant dans la conduite ; une ou plusieurs nappes d'armures et au moins une gaine d'étanchéité externe en matériau polymérique. Ce type de conduite flexible est souvent dénommé "smooth-bore" (à passage lisse) par les spécialistes en la matière.

D'autres conduites flexibles dénommées "rough-bore" (à passage non lisse) comprennent, de l'intérieur vers l'extérieur, un tube métallique flexible non étanche, appelé carcasse, constitué par un profilé enroulé en spires agrafées les unes sur les autres, comme par exemple un feuillard agrafé ou un fil de forme agrafé tel qu'un fil en T, en U, en S ou en Zêta, une gaine d'étanchéité interne en matériau polymérique, une ou plusieurs nappes d'armures capables de résister aux efforts développés par la pression du fluide circulant dans la conduite et aux efforts extérieurs auxquels est soumise la conduite flexible, et au moins une gaine de protection externe du type polymérique.

Dans ce dernier type de conduites flexibles, la gaine d'étanchéité interne est directement extrudée, en continu, sur ladite carcasse qui présente entre les spires enroulées des interstices ou déjoints.

Pour assurer un bon contact entre la gaine d'étanchéité interne et la carcasse métallique, il est nécessaire que le diamètre interne de la gaine d'étanchéité interne soit le plus proche possible et même égale au diamètre externe de la carcasse métallique flexible.

Lors de la fabrication d'une conduite flexible du type "rough-bore", la gaine d'étanchéité interne qui est extrudée sur la carcasse métallique, se contracte sur cette dernière au cours du refroidissement. Suivant les matériaux utilisés pour la réalisation de la gaine d'étanchéité interne, on observe, après refroidissement, des déformations appelées "retassures" qui apparaissent sur la face interne de ladite gaine d'étanchéité interne et notamment de part et d'autre des déjoints entre les spires de la carcasse métallique. De telles retassures sont dues, semble-t-il, au rétreint différentiel du matériau utilisé pour la gaine d'étanchéité interne, en raison de la variation du gradient de refroidissement dans l'épaisseur de la gaine d'étanchéité interne, cumulé à l'effet des déjoints des spires de la carcasse métallique. En effet, la gaine plastique d'étanchéité extrudée étant en contact par sa face interne sur la carcasse métallique qui est à la température ambiante, il en résulte que le refroidissement de ladite face interne est très rapide, ce qui provoque des irrégularités de surface ou retassures ; ce phénomène est amplifié au niveau des déjoints des spires de la carcasse métallique, le rétreint différentiel en ces endroits provoquant des variations d'épaisseur locales de la gaine d'étanchéité interne. Lorsque la gaine d'étanchéité est en polymère semi-cristallin, sensible à la présence de défauts de surface entraînant une déchéance de la gaine pouvant aller jusqu'à la rupture, comme par. exemple le PVDF (polyfluorure de vinylidène), cela entraîne très souvent, en fonctionnement, une dégradation de ladite gaine d'étanchéité (rupture) qui n'assure plus alors sa fonction d'étanchéité.

Pour remédier à un tel inconvénient et pour résoudre le problème posé par l'apparition des retassures, une première solution a consisté à disposer, entre la carcasse métallique et la gaine d'étanchéité interne, une sous-couche sacrificielle de faible épaisseur (environ 2 à 3 mm), en un matériau approprié tel que du PVDF, qui sert alors d'écran thermique. La gaine d'étanchéité interne est extrudée sur ladite sous-couche sacrificielle mais en s'assurant qu'il n'y ait pas de "soudure" ou liaison intime entre la gaine d'étanchéité et la sous-couche sacrificielle, afin que les fissures qui peuvent se propager depuis la face interne de la sous-couche vers l'extérieur soient bloquées à l'interface de la gaine d'étanchéité et de la sous-couche sacrificielle.

L'inconvénient majeur de cette solution est le glissement susceptible de se produire entre la gaine d'étanchéité interne et la sous-couche sacrificielle au niveau des extrémités de la conduite flexible, ainsi que les surcoûts de matière première et de transformation occasionnés par la présence de ladite sous-couche sacrificielle.

On pourrait prévoir d'extruder une gaine sacrificielle de plus faible épaisseur (inférieure ou égale à 1 mm), mais en raison du diamètre du tube extrudé (supérieur à 10 cm), il est impossible d'extruder industriellement un tube de si faible épaisseur. On est donc limité à une gaine de 2 à 3 mm. De plus, l'opération impose un enroulement sur bobine intermédiaire ; la gaine intermédiaire étant de faible épaisseur, elle flambera lors de l'enroulement.

Pour éviter ces inconvénients, il a été proposé dans le document FR 2752904 (COFLEXIP) un procédé de fabrication de conduites flexibles, qui consiste à chauffer le tube flexible métallique ou carcasse métallique à une température inférieure à 100°C, en amont des moyens d'extrusion, de manière à éviter ainsi un refroidissement brutal de la face interne lors de l'extrusion sur la carcasse métallique.

Pour les matériaux plastiques à viscosité très faible, on est obligé de chauffer le produit à une température très élevée et par conséquent la carcasse à une température élevée. Cette température élevée entraîne un thermo-fluage très important dans les déjoints de la carcasse imposant d'insérer dans ces déjoints un jonc limitant le volume de fluage pour éviter le blocage de la carcasse. Un tel jonc est décrit dans le document FR 2 779 797 (COFLEXIP), mais le spiralage du jonc dans les déjoints de la carcasse n'est pas simple à mettre en oeuvre. Les documents EP 0749546 (COFLEXIP- ELF ATOCHEM) et FR 2732441 (COPLEXIP) décrivent l'enroulement hélicoïdal à pas court d'une bande intermédiaire pour suivre et partiellement combler les déjoints et s'apparentent donc à la solution précédente.
Une autre solution proposée dans le document EP 166385 (FURUKAWA) consiste à enrouler autour de la carcasse plusieurs couches de rubans plastiques (par exemple polyester) de faible épaisseur (environ 0,5 mm pour un tube d'environ 2 à 8 cm de diamètre interne). Cette couche intermédiaire masque les déjoints et évite le fluage de la gaine d'étanchéité dans les déjoints de la carcasse. Le détail de l'enroulement n'est pas expliqué dans le document.

La couche intermédiaire, en empêchant le fluage de la gaine d'étanchéité dans la carcasse, empêche aussi de ce fait l'accrochage de la gaine sur la carcasse et crée donc des problèmes de glissements entre les deux couches. Pour des applications aux "risers" (colonnes montantes), cela peut entraîner la détérioration de la conduite flexible : le jeu entre les spires n'étant pas contrôlé par les indentations de fluage, la carcasse peut glisser sous son propre poids, les jeux entre spires s'annulant et s'accumulant en pied de colonne entraînant la destruction de la carcasse dans la partie supérieure.

Le but de l'invention est de proposer dans le cadre d'une conduite flexible un système de recouvrement de la carcasse qui sert d'écran thermique à la gaine plastique extrudée de manière à éviter la formation de retassures, mais qui ne présente pas les inconvénients des solutions précitées et permette une pose simple.

L'invention atteint son but grâce à une conduite flexible du type comportant de l'intérieur vers l'extérieur une carcasse réalisée par un enroulement hélicoïdal métallique à pas court formant des déjoints, une couche de recouvrement servant d'écran thermique constituée de rubans de plastique enroulés hélicoïdalement, une gaine interne de pression, étanche, extrudée en plastique sur ladite couche de recouvrement, au moins une nappe d'armures enroulée autour de ladite gaine d'étanchéité et au moins une gaine d'étanchéité externe, caractérisée en ce que les rubans de recouvrement sont enroulés à pas long, c'est-à-dire avec un angle d'enroulement inférieur à 35°.

Pour ce faire, on dispose en amont de l'extrudeuse de gaine une rubaneuse pour disposer autour de la carcasse plusieurs rubans plastiques de faible épaisseur à pas long, de préférence entre 10° et 35°.

Ces rubans sont enroulés de préférence avec chevauchement, ce qui permet d'assurer que toute la carcasse est recouverte par cette couche. Ce chevauchement des rubans peut créer un défaut sur la surface interne de la gaine extrudée, mais ce défaut éventuel est hélicoïdal à pas long, et donc sans grande influence sur la gaine d'étanchéité. Le chevauchement des rubans est typiquement de l'ordre de 10% de la largeur de ruban.

En enroulant les rubans à pas long, on évite que les racleurs de l'extrudeuse ne soulèvent ces rubans et on limite aussi la longueur de rubans nécessaire pour le recouvrement de toute la longueur de la conduite flexible, ce qui évite des rechargements en cours de production.

Le ruban est assez épais pour servir d'écran thermique pour la gaine d'étanchéité lors de l'extrusion (jusqu'à ce que la surface interne de la gaine se fige) afin d'éviter la formation de retassures, et cependant assez fin pour permettre l'indentation de la gaine d'étanchéité dans les déjoints de la carcasse pour en permettre l'accrochage. Avantageusement, les indentations forment environ de 20% à 75% du volume du déjoint. L'épaisseur du ruban est aussi fonction de la matière dont il est constitué mais elle est généralement inférieure à 1/5^{ème} de l'épaisseur de la gaine de pression et de préférence de l'ordre de 1 mm voire inférieure.

Le ruban n'ayant pas de fonction dans le comportement de la conduite flexible, il peut très bien se dégrader au contact de la gaine plastique extrudée, du moment qu'il sert quand même d'écran thermique jusqu'à ce que la surface interne de la gaine plastique se fige. Il convient qu'il ait donc une durée de vie d'environ une minute.

De manière à pouvoir poser en grande longueur ce ruban et à éviter les risques de rupture pendant sa pose (ce qui obligerait à recommencer l'extrusion) ou d'allongement incontrôlé du ruban, le ruban a de préférence une résistance à la traction supérieure à 20 daN (effort de traction imposé par la rubaneuse). Cette résistance peut être assurée par la matière constitutive de base du ruban ou par des renforts, notamment des renforts métalliques ou textiles (de fibres ou de "rovings" en type Kevlar® ou en carbone), par exemple sous forme de renforts longitudinaux ou de treillis.

La largeur des rubans est de préférence proche du diamètre externe de la carcasse de manière à assurer le recouvrement avec 3 à 5 rubans.

La matière constitutive des rubans de recouvrement est choisie pour avoir une résistance à la flexion (module d'élasticité) relativement faible de manière à se déformer au niveau des déjoints pour permettre le fluage souhaité lorsque la gaine se contracte.

La matière constitutive des rubans peut être de type thermorétractable, renforcé ou non, ce qui peut améliorer la formation des indentations.

Le ruban peut présenter des encoches longitudinales (qui ne diminuent pas la résistance à la traction du ruban), l'indentation de la gaine de pression dans la carcasse s'effectuant au travers de ces encoches.

Les rubans peuvent être réalisés dans une matière compatible avec la gaine de pression, c'est-à-dire des polyoléfines, polyamides (de préférence de type polyamide 11 RILSAN ®), polymères fluorés (homo- ou copolymères) modifiés ou non (polyfluorure de vinylidène "PVDF" ou polyfluoralkoxyl) ou élastomère hydrogéno-carbonés, fluorés ou silico-fluorés (thermoplastique élastomère ou thermoplastique uréthanne).

Le ruban peut avoir une résistance à la flexion inférieure à l'effort de contraction de la gaine de pression lors de son refroidissement. La résistance à la flexion du ruban dépend du module à chaud, de l'épaisseur du ruban. L'effort généré par la contraction de la gaine de pression dépend de l'épaisseur de la gaine de pression et du module d'élasticité à chaud de cette gaine et de la taille du déjoint. L'homme du métier sait déterminer le comportement de la gaine de pression lors de son refroidissement en utilisant par exemple le logiciel ABAQUS et par conséquent l'épaisseur maximale du ruban pour permettre l'indentation de la gaine de pression dans la carcasse.

Pour le cas où le ruban s'élimine au contact de l'extrudat (gaine de pression), un exemple de matière convenant pour le ruban est un polyester polyuréthanne (TPU) connu sous le nom ESTANE ® 58271 dont la viscosité diminue rapidement sous température élevée (la couche peut s'éliminer en 30 jours à 120°C). En faible épaisseur au contact de l'extrudat (à une température d'extrusion supérieure à 230°C pour un PVDF), le ruban aura une durée de quelques minutes, suffisante pour permettre à la surface interne de la gaine de pression de se figer (température de solidification proche de 160-170°C pour un PVDF).

D'autres avantages et caractéristiques de la présente invention apparaîtront plus clairement à la lecture de la description suivante, ainsi que des dessins annexés sur lesquels :

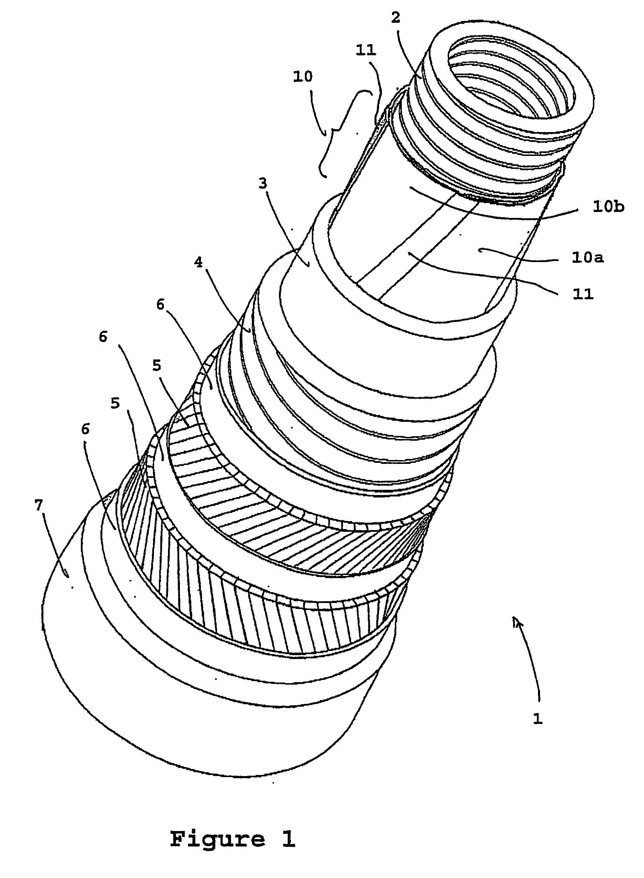

- la figure 1 est une vue en perspective partielle d'une conduite flexible du type "rough-bore" comportant les rubans de recouvrement conformes à l'invention,
- la figure 2 est une vue en coupe longitudinale partielle d'une partie de la conduite flexible de la figure 1 montrant les rubans de recouvrement et la gaine qui les recouvre,
- les figures 3 à 5 sont des représentations schématiques de rubans convenant à l'invention.

Une conduite flexible 1 du type "rough-bore" comprend de l'intérieur vers l'extérieur :
- un tube métallique flexible ou carcasse 2, réalisé par enroulement hélicoïdal à pas court (c'est-à-dire avec un angle d'enroulement voisin de 90°) de feuillard ou de fil métallique de section prédéterminée,
- une gaine d'étanchéité interne ou de pression 3 en polymère disposée autour de la carcasse 2,
- une voûte de pression 4 résistant principalement à la pression développée par le fluide dans la gaine d'étanchéité et constituée par l'enroulement en hélice à pas court (c'est-à-dire avec un angle d'enroulement voisin de 90°) autour de la gaine interne, d'un ou plusieurs fils métalliques de forme agrafés (auto-agrafables ou non) ; les fils de formes ont une section en Z ou en T ou leurs dérivés (teta ou zeta), en U ou en I,
- une ou plusieurs nappes d'armures 5 enroulées à pas long, par exemple deux nappes croisées d'armures de traction dont l'angle d'armage mesuré sur l'axe longitudinal de la conduite est inférieur à 60°,
- éventuellement une ou plusieurs bandes intermédiaires 6, et
- une gaine d'étanchéité externe 7 en polymère.

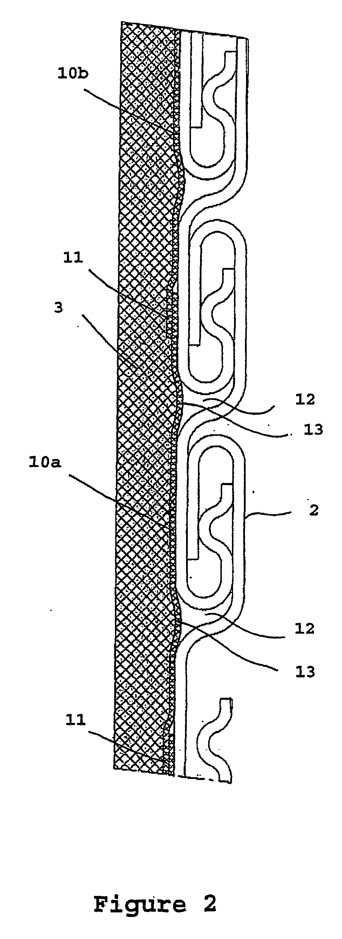

Selon l'invention, entre la carcasse 2 et la gaine de pression 3 a été disposée une couche de recouvrement 10 formée par des rubans de recouvrement 10a, 10b, etc., enroulés à pas long et avec un léger recouvrement marginal 11. Comme le montre la figure 2, au niveau d'un déjoint 12 entre deux spires adjacentes de carcasse 2 (réalisée ici par un feuillard auto-agrafé en S), le ruban 10a ou 10b est enfoncé après extrusion de la gaine 3 dans le déjoint en formant une rainure hélicoïdale comblée par la gaine extrudée 3, formant ainsi une indentation hélicoïdale 13.

L'enroulement des rubans formant la couche de recouvrement s'effectue à pas long avec un angle d'enroulement inférieur à 35°. Selon un cas extrême non représenté, la couche de recouvrement peut être réalisée par un ou plusieurs rubans disposés longitudinalement selon l'axe de la conduite (l'angle « d'enroulement » étant alors de 0°).

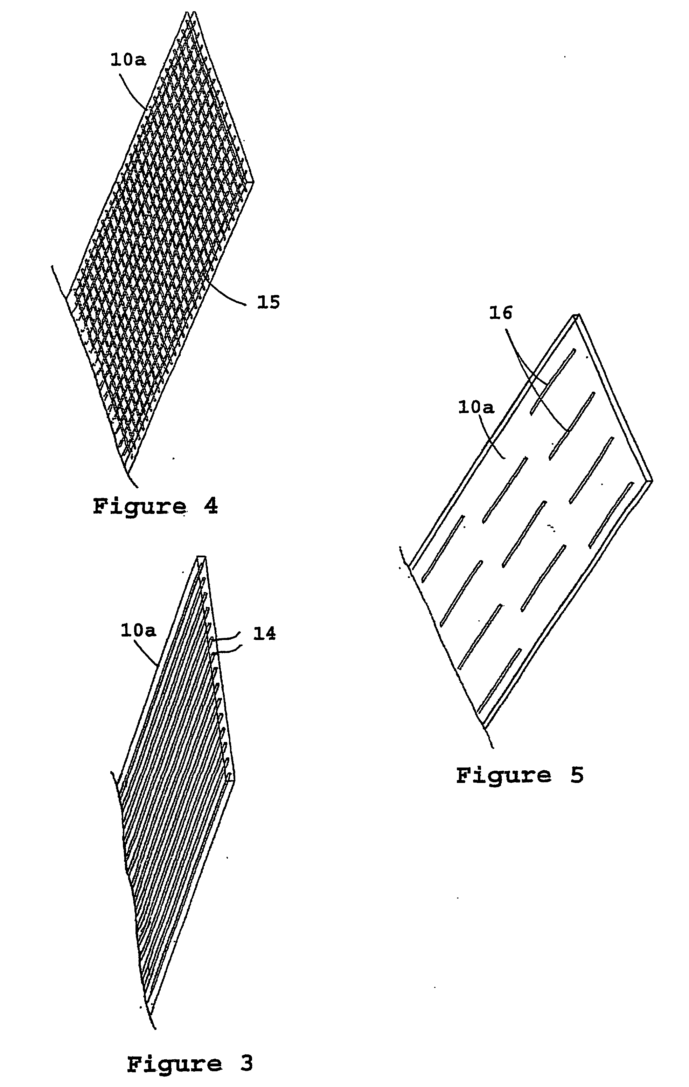

Les figures 3 à 5 montrent divers exemples de rubans de recouvrement utilisables dans l'invention. Le ruban 10a de la figure 3 comporte des renforts longitudinaux 14, par exemple en Kevlar® ou en carbone, disposés au sein d'une matrice en matière plastique. Selon la figure 4, les renforts intégrés à la matière du ruban 10a sont sous forme d'un treillis 15, par exemple métallique. Selon la figure 5, le ruban 10a comporte des incisions ou encoches longitudinales 16 qui permettent le passage de la matière constituant la gaine lors de l'extrusion de celle-ci et facilitent la formation d'indentations de plus grande taille.

## Revendications

1. Conduite flexible (1) du type comportant de l'intérieur vers l'extérieur une carcasse (2) réalisée par un enroulement hélicoïdal métallique à pas court formant des déjoints (12), une couche de recouvrement (10) servant d'écran thermique constituée de rubans de plastique (10a, 10b) enroulés hélicoïdalement, une gaine interne de pression (3), étanche, extrudée en plastique sur ladite couche de recouvrement (10), au moins une nappe d'armures (5) et au moins une gaine d'étanchéité externe (7), **caractérisée en ce que** les rubans de recouvrement (10a, 10b) sont enroulés avec un angle d'enroulement inférieur à 35°.

2. Conduite selon la revendication 1, **caractérisée en ce que** l'angle d'enroulement des rubans (10a, 10b) est compris entre 10° et 35°.

3. Conduite selon l'une quelconque des revendications 1 ou 2, **caractérisée en ce que** les rubans (10a, 10b) sont enroulés avec chevauchement.

4. Conduite selon l'une quelconque des revendications précédentes, **caractérisée en ce que** les rubans (10a, 10b) ont une épaisseur inférieure ou égale à 1 mm.

5. Conduite selon l'une quelconque des revendications précédentes, **caractérisée en ce que** les rubans (10a, 10b) ont une largeur de l'ordre du diamètre externe de la carcasse (2).

6. Conduite selon l'une quelconque des revendications précédentes, **caractérisée en ce que** la couche de recouvrement (10) est formée de 3 à 5 rubans (10a-10b).

7. Conduite selon l'une quelconque des revendications précédentes, **caractérisée en ce que** les rubans (10a, 10b) sont en matière plastique renforcée.

8. Conduite selon l'une quelconque des revendications précédentes, **caractérisée en ce que** les rubans (10a, 10b) ont une résistance à la traction supérieure à 20daN.

9. Conduite selon l'une quelconque des revendications précédentes, **caractérisée en ce que** les rubans (10a, 10b) présentent des encoches longitudinales.

## Patentansprüche

1. Flexible Leitung (1) des Typs, der von innen nach außen eine Karkasse (2), die durch eine metallische schraubenlinienförmige Wicklung mit geringer Steigung verwirklicht ist, die Unterteilungsräume (12) bildet, eine Abdecklage (10), die als Wärmeabschirmung dient und aus Kunststoffbändern (10a, 10b) gebildet ist, die schraubenlinienförmig gewickelt sind, eine dichte innere Druckabschirmung (3), die auf die Abdecklage (10) aus Kunststoff stranggepresst ist, wenigstens einen Armierungsmantel (5) und wenigstens eine äußere Dichtungsabschirmung (7) umfasst, **dadurch gekennzeichnet, dass** die Abdeckbänder (10a, 10b) unter einem Wicklungswinkel von weniger als 35° gewickelt sind.

2. Leitung nach Anspruch 1, **dadurch gekennzeichnet, dass** der Wicklungswinkel der Bänder (10a, 10b) im Bereich von 10° bis 35° liegt.

3. Leitung nach einem der Ansprüche 1 oder 2, **dadurch gekennzeichnet, dass** die Bänder (10a, 10b) überlappend gewickelt sind.

4. Leitung nach einem der vorhergehenden Ansprüche, **dadurch gekennzeichnet, dass** die Bänder (10a, 10b) eine Dicke besitzen, die kleiner oder gleich 1 mm ist.

5. Leitung nach einem der vorhergehenden Ansprüche, **dadurch gekennzeichnet, dass** die Bänder (10a, 10b) eine Breite in der Größenordnung des Außendurchmessers der Karkasse (2) besitzen.

6. Leitung nach einem der vorhergehenden Ansprüche, **dadurch gekennzeichnet, dass** die Abdecklage (10) aus 3 bis 5 Bändern (10a-10b) gebildet ist.

7. Leitung nach einem der vorhergehenden Ansprüche, **dadurch gekennzeichnet, dass** die Bänder (10a, 10b) aus verstärktem Kunststoff bestehen.

8. Leitung nach einem der vorhergehenden Ansprüche, **dadurch gekennzeichnet, dass** die Bänder (10a, 10b) einen Zugwiderstand von mehr als 20 daN besitzen.

9. Leitung nach einem der vorhergehenden Ansprüche, **dadurch gekennzeichnet, dass** die Bänder (10a, 10b) longitudinale Nuten besitzen.

## Claims

1. A flexible pipe (1) of the type comprising, from the inside outward, a carcass (2) formed by a short-pitch helical metal winding leaving gaps (12), a covering layer (10) serving as a heat shield, consisting of helically wound plastic tapes (10a, 10b), an impermeable internal pressure sheath (3) made of a plastic extruded over said covering layer (10), at least one armor ply (5) and at least one external sealing sheath (7), **characterized in that** the covering tapes (10a, 10b) are wound with a winding angle of less than 35°.

2. The pipe as claimed in claim 1, **characterized in that** the winding angle of the tapes (10a, 10b) is between 10° and 35°.

3. The pipe as claimed in either of claims 1 and 2, **characterized in that** the tapes (10a, 10b) are wound with an overlap.

4. The pipe as claimed in any one of the preceding claims, **characterized in that** the tapes (10a, 10b) have a thickness of less than or equal to 1 mm.

5. The pipe as claimed in any one of the preceding claims, **characterized in that** the tapes (10a, 10b) have a width of about the outside diameter of the carcass (2).

6. The pipe as claimed in any one of the preceding claims, **characterized in that** the covering layer (10) is formed from 3 to 5 tapes (10a, 10b).

7. The pipe as claimed in any one of the preceding claims, **characterized in that** the tapes (10a, 10b) are made of a reinforced plastic.

8. The pipe as claimed in any one of the preceding claims, **characterized in that** the tapes (10a, 10b) have a tensile strength greater than 20 daN.

9. The pipe as claimed in any one of the preceding claims, **characterized in that** the tapes (10a, 10b) have longitudinal notches.
